(19) **Europäisches Patentamt**
**European Patent Office**
**Office européen des brevets**

(11) **EP 1 964 395 B1**

(12) **EUROPEAN PATENT SPECIFICATION**

(45) Date of publication and mention
of the grant of the patent:
**18.09.2013 Bulletin 2013/38**

(51) Int Cl.:
**H04N 5/44** *(2011.01)*

(21) Application number: **06848970.7**

(22) Date of filing: **21.12.2006**

(86) International application number:
**PCT/US2006/048787**

(87) International publication number:
**WO 2007/075885 (05.07.2007 Gazette 2007/27)**

(54) **METHODS AND APPARATUS FOR PROGRESSIVE SCANNING OF INTERLACED VIDEO**

VERFAHREN UND VORRICHTUNG ZUR PROGRESSIVEN ABTASTUNG VON ZWISCHENZEILEN-VIDEOINHALTEN

PROCEDES ET APPAREIL POUR LE BALAYAGE PROGRESSIF D'UNE VIDEO ENTRELACEE

(84) Designated Contracting States:
**DE FR GB**

(30) Priority: **21.12.2005 US 752659 P**

(43) Date of publication of application:
**03.09.2008 Bulletin 2008/36**

(73) Proprietor: **Analog Devices, Inc.**
**Norwood, MA 02062-9106 (US)**

(72) Inventors:
• **PAN, Guolin**
**Westwood, MA 02090 (US)**

• **LIS, Fabian**
**Newton, MA 02461 (US)**

(74) Representative: **Beck, Simon Antony et al**
**Withers & Rogers LLP**
**4 More London Riverside**
**London**
**SE1 2AU (GB)**

(56) References cited:
EP-A- 1 139 659    EP-A- 1 158 792
EP-A- 1 164 792    EP-A- 1 450 560
EP-A1- 0 361 558   EP-A1- 1 511 311
EP-A2- 0 720 366   WO-A-2004/098178
US-A- 5 748 250

**Description**

RELATED APPLICATIONS

This application claims priority under 35 U.S.C. [section] 119(e) to U.S. Provisional Application Serial No. 60/752,659, entitled "FAST MEDIAN SINGLE EDGE BASED LINE AVERAGE FIELD INTERPOLATOR," filed on December 21, 2005.

FIELD OF INVENTION

The present invention relates generally to progressive display of interlaced video (deinterlacing) , and more particularly, to motion compensation techniques for deinterlacing.

BACKGROUND OF INVENTION

Historically, the de facto standard for both the capture (e.g., recording) and display (e.g., scanning) of video has been interlacing. For example, conventional broadcast television, cable television, etc., have by and large adopted the interlaced format. The National Television System Committee (NTSC) standard, used for television broadcast in the United States, specifies that video be provided in the interlaced format at a rate of 30 frames per second (fps) . The Phase Alternating Line (PAL) and Sequential Color Memory (SECAM) standards specify using the interlaced video format at a rate of 25 fps.

The interlaced format involves dividing video into even and odd fields. For example, video is generally comprised of a plurality of frames, wherein each frame is a still image of the scene at some moment in time. Each frame is typically divided into a horizontal sequence of lines, referred to as scan lines, each scan line composed of a series of pixels that can be raster scanned from left to right. The interlaced format specifies dividing each frame into an odd field containing odd-numbered scan lines, and an even field containing even-numbered scan lines for a respective frame.

When acquiring video in the interlaced format (e.g., capturing video on a video recorder), the even and odd fields may be obtained separately. For example, all odd-numbered scan lines in the odd field may be captured first, followed by the acquisition of all even-numbered scan lines in the even field. Similarly, interlaced video has conventionally been displayed by scanning the entirety of the respective fields in sequential order. That is, the entire odd field may be displayed first, followed by the entire even field. However, the order in which the fields are displayed may be switched. For example, the PAL standard specifies displaying the odd field first, while the NTSC standard specifies displaying the even field first. The respective fields are typically displayed by raster scanning each individual scan line from left to right, top to bottom.

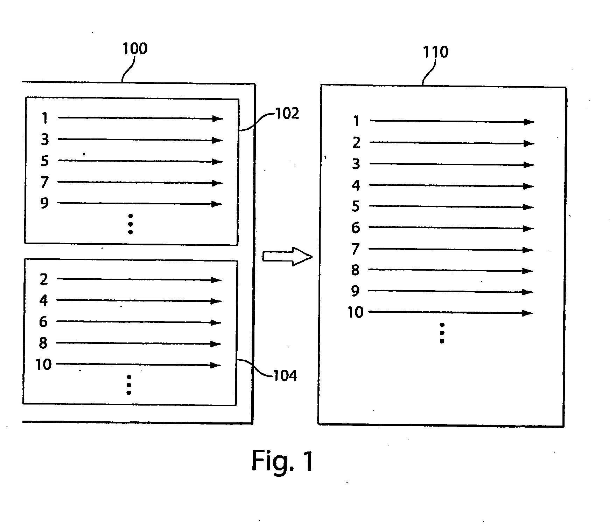

FIG. 1 illustrates a frame of interlaced video 100 comprised of an odd field 102 and an even field 104. Frame 100 may be stored and/or transmitted in this interlaced format. To display frame 110, the even and odd fields may then be reconstituted as display frame 110. As discussed above, the conventional method of displaying interlaced video is to scan the two fields separately. In particular, according to the NTSC standard, display frame 110 would be displayed by scanning the entire even field, followed by the entire odd field. That is, scan lines 2, 4, 6, ... $N_{even}$, may be raster scanned first, followed by scan lines 1, 3, 5 ... $N_{odd}$. Using the PAL standard, the order in which the fields are displayed are switched (i.e., the odd field first, followed by the even field). Displays that scan interlaced video as described in the foregoing are referred to herein as interlaced displays.

While interlaced displays are widely used, many hand-held devices, computer monitors, plasma screens, liquid crystal displays (LCD), digital light processing (DLP) displays, etc., display video using a progressive scan. In a progressive scan, the even and odd fields are scanned together in numerical scan line order, from the top line to the bottom. That is, the first odd scan line is followed by the first even scan line and so on, rather than scanning all odd scan lines before scanning all even scan lines (or vice-versa). For example, a progressive scan of frame 100 in FIG. 1 may involve displaying scan line 1 (from the odd field), followed by scan line two (from the even field), and so on down the frame alternating between displaying a line from the odd and even fields. The process of displaying interlaced video using a progressive scan is commonly referred to as "deinterlacing."

As discussed above, interlaced video is designed to be captured, transmitted or stored and displayed in the same interlaced format. Therefore, the even and odd fields of interlaced video may be captured at different moments in time. Because progressive scans alternate between even and odd scan lines, interlaced video that is progressively scanned will be displayed in a different temporal order from which the video was captured. As a result, progressive scans are susceptible to motion artefacts resulting from displaying, at substantially the same moment, data that was obtained at different times.

EP 0361558 discloses a picture signal processing circuit including a median filter having first, second and third inputs to which respective signals from picture elements of three positionally consecutive lines from a preceding and present field of a line and field sequentially assembled picture signal are applied. The document suggests that a better result for moving contours in a picture signal can be obtained by taking a weighted average of the signals of the present field, and to take this average instead of or mixed with an output signal of the median filter.

WO2004/098178 discloses a method of and apparatus for providing a progressive scan image from an interlaced image. For each pixel to be inserted in the field from the interlaced image a difference value is derived from each pair of a set of symmetrically opposed pixels with respect to the pixel to be reconstructed. A determination is made as to which pair of pixels has the lowest difference value associated with it and the average value of this pixel to be inserted when this average value falls within a range defined by the value of pixels directly above and below the pixel to be reconstructed.

EP 1164792 discloses a format converter which performs frame rate conversion and de-interlacing using a bi-directional motion vector. The processing includes estimating a bi-directional motion vector between the current frame and the previous frame from a frame to be interpolated; setting the motion vector of a neighbouring block that has the minimum error distortion among motion vectors estimated in the previous step, and forming a frame to be interpolated.

## SUMMARY OF THE INVENTION

According to a first aspect of the present invention there is provided a method of determining a target pixel value at a horizontal position of an intermediate scan line in a progressive display of interlaced video on a progressive display device, the interlaced video comprising a plurality of frames, each frame including a first field and a second field, the first field and the second field containing alternating scan lines of the respective frame, the method comprising computer implemented acts of: calculating a first difference between a first pixel value obtained from the interlaced video at the horizontal position in a first scan line of the first field and a second pixel value obtained from the interlaced video at the horizontal position in a first scan line of the second field; calculating a second difference between the second pixel value and a third pixel value obtained from the interlaced video at the horizontal position in a second scan line of the first field; multiplying the first and second differences to obtain an indicator value; determining, if the indicator value greater than or equal to zero, that the second pixel value is a median; and determining, if the indicator value is less than zero, that the second pixel value is not the median.

According to a second aspect of the present invention there is provided an apparatus for determining a target pixel value of an intermediate scan line in a progressive display of interlaced video on a progressive display device, the interlaced video comprising a plurality of frames, each frame including a first field and a second field, the first field and the second field containing alternating scan lines of the respective frame, the apparatus comprising: a display capable of displaying pixels in a progressive scan; and at least one processor coupled to the display, characterised by the at least one processor being configured to calculate a first difference between a first pixel value obtained from the interlaced video at a horizontal position in a first scan line of the first field and a second pixel value obtained from the interlaced video at the horizontal position in a first scan line of the second field, calculate a second difference between the second pixel value and a third pixel value obtained from the interlaced video at the horizontal position in a second scan line of the first field, and multiply the first difference and the second difference to obtain an indicator value, wherein if the indicator value is greater than or equal to zero, the at least processor determines the second pixel value to be the median, and if the indicator value is less than zero, the at least one processor determines that the second pixel is not the median.

## BRIEF DESCRIPTION OF DRAWINGS

FIG. 1 is a schematic diagram illustrating displaying video in the interlaced video format;
FIG. 2 is a schematic diagram illustrating a conventional progressive scan of interlaced video; FIG. 3 is a schematic diagram illustrating a progressive scan of interlaced video, in accordance with some embodiments of the present invention;
FIG. 4 is a flow chart illustrating a method of determining pixel values for intermediate scan lines of a progressive scan of interlaced video, in accordance with some embodiments of the present invention; FIG. 5 is a flow chart of a conventional median computation; and
FIG. 6 is a flow chart of a median computation, in accordance with some embodiments of the present invention; and
FIG. 7 is a block diagram illustrating an apparatus suitable for implementing various aspects of the present invention.

## DETAILED DESCRIPTION

As discussed above, a progressive scan of interlaced video may be vulnerable to motion artefacts as a result of scan lines being displayed in a different temporal order from which they were obtained. Various deinterlacing methods having been developed to compensate for various motion effects. A first category of motion compensated methods, referred to as intra-field, use only one of the two fields to derive the video data for a progressive display. While intra-field methods address motion artifacts, the use of only half of the available video data may result in a significant loss in vertical resolution.

Another category of motion compensated methods, referred to as inter-field, combine the data from the even and odd fields in a prescribed way, such as, for example, averaging fields to arrive at the pixel values for the display scan lines. However, because the data is always combined, at least some scan lines will always be synthesized rather than having the true captured value, even when no motion is present. This may result in a corresponding loss of resolution.

A third category of motion compensated methods determine pixels for display depending on whether motion occurred at a particular pixel. For example, some methods first process a neighborhood of pixel values about a target pixel to determine if the true pixel value is an artifact of motion, and in some methods, the extent and nature of the motion. By analyzing the relationship between neighborhood pixels, the value of the target pixel may be used to compensate for motion. While the third category tends to address motion effects more effectively than intra and inter-field methods, conventional types of such methods may be computationally expensive. In particular, a motion detection algorithm is typically performed at each pixel, at least for alternating scan lines. As such, sophisticated algorithms may be prohibitively expensive and thus limited in application.

Applicant has identified a motion detection and compensation algorithm that is relatively simple computationally. In some embodiments, pixel values in a particular scan line from one of the fields are determined by first computing whether a target pixel in the scan line is the median of vertically adjacent pixels in scan lines from the other field to detect if motion has occurred. If the target pixel is the median value, the value of the target pixel is used for display, otherwise, the average of the vertically adjacent pixels is used for display. Accordingly, motion may be detected by a relatively simple median computation, and therefore may be implemented on a wide variety of processors.

Applicant has further appreciated that conventional methods that perform median calculations, for example, various median filtering algorithms, compute the median by first determining which of the input pixel values is the median and then comparing the median value with the target pixel to determine if the target pixel is the median. Applicant has recognized that fewer computations may be sufficient for median calculations. In particular, Applicant has developed an algorithm that performs median computations by identifying whether the target pixel is the median value, rather than computing which of the input pixel values is the median and making the associated comparison, as discussed in further detail below. As a result, median computations may be performed more efficiently from a computational standpoint.

Following below are more detailed descriptions of various concepts related to, and embodiments of, methods and apparatus according to the present invention. It should be appreciated that various aspects of the invention described herein may be implemented in any of numerous ways. Examples of specific implementations are provided herein for illustrative purposes only. In addition, the various aspects of the invention described in the embodiments below may be used alone or in any combination, and are not limited to the combinations explicitly described herein.

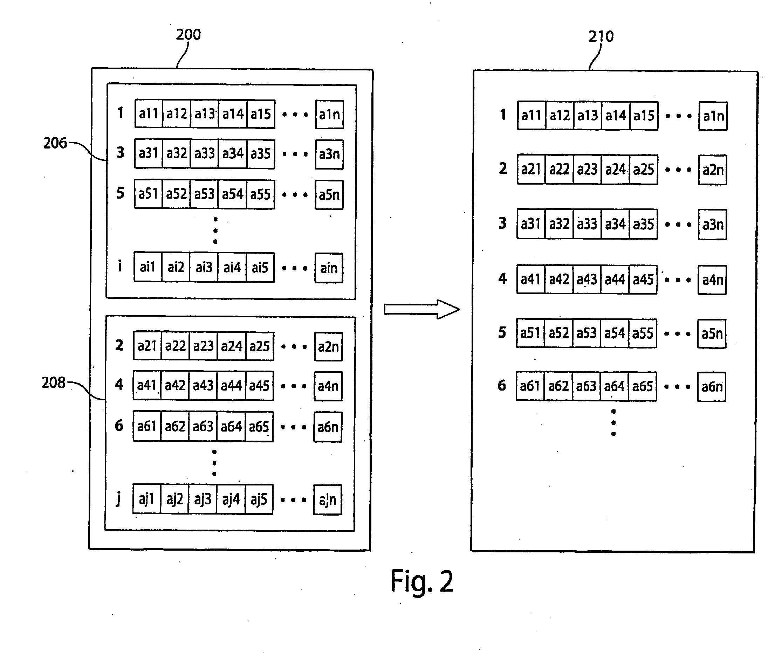

FIG. 2 illustrates a method of displaying interlaced video using a progressive scan. In FIG. 2, a frame of interlaced video 200 is shown, including a first field 206 (e.g., an odd field) and a second field 208 (e.g., an even field), each field comprising a plurality of pixels, labeled with values a, and indexed by the corresponding location of the pixel in the frame. To transform the interlaced video to progressive display video, scan lines from fields 206 and 208 are used directly to form scan lines of a frame of display video 210. Since the frame is to be displayed using a progressive scan, the scan lines from the odd and even fields are displayed alternately in sequential fashion (e.g., the resulting frame is displayed odd, even, odd, even, etc.).

As discussed above, in a conventional progressive scan (e.g., a progressive scan without motion compensation), the scan lines from the odd and even fields may be used directly without modification to form respective frames of the display video. As shown in FIG. 2, the pixel values of scan line 1 (i.e., pixel values $a_{11}$-$a_{1n}$) are directly scanned into the scan line 1 of display frame 210. Similarly, the pixel values of scan line 2 (i.e., pixel values $a_{21}$-$a_{2n}$) are directly scanned into scan line 2 of display frame 210. As a result, conventional progressive scans directly scan in the first odd line, followed by the first even line, and so forth to the last odd and even scan line.

However, conventional progressive scan approaches may result in motion artifacts in the resulting display data due to displaying the data in a different temporal order from which it was obtained. In particular, one field may have been captured in its entirety before acquiring the second field, and therefore adjacent scan lines in the display frame will have been captured at different moments in time. For example, using the NTSC standard (which specifies 30 fps) scan line 2 may have been captured 1/60 of second after scan line 1 was captured, during which objects in the scene being captured could have moved perceptibly. To address problems associated with motion, alternating lines in frame 210 may be determined based on the relationship between adjacent scan lines.

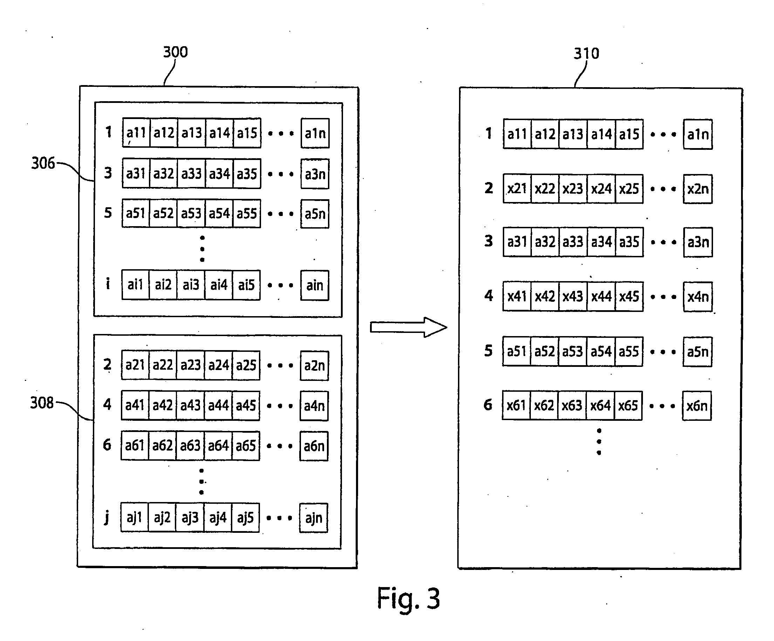

FIG. 3 illustrates a method of displaying interlaced video using a progressive scan having motion compensation, in accordance with some embodiments of the present invention. Frame 300 may be the same as frame 200 illustrated in FIG. 2. However, rather than scanning each scan line directly from the interlaced frame 300, alternating lines may be computed by considering one or more factors such as the relationship between a pixel value and neighboring pixel values. For example, the odd scan lines (e.g., scan lines 1, 2, 3 ... i) may be directly scanned into display frame 310 as in conventional progressive scans. However, the pixel values of the even scan lines in the display frame may be determined to compensate for motion and not necessarily directly scanned, as indicated by the x values in the even scan lines. Scan lines that are determined based on neighboring scan lines are referred to as intermediate scan lines. It should be appreciated that while FIG. 3 illustrates the even scan lines as the intermediate scan lines and directly scanning in the odd scan lines, the roles may be switched, as the aspects of the invention are not limited in this respect.

In some embodiments, pixel values of the intermediate scan lines are determined from the relationship between pixel values in vertically adjacent scan lines. For example, pixel values in odd lines of frame 300 may be directly scanned into display frame 310. To compensate for motion artifacts that may have resulted due to the fact that the even field was obtained at a different moment in time from the odd field, pixel values in even scan lines of the display frame 310 may be determined based on the relationship between pixel values in the even scan lines and pixel values in the immediately preceding and succeeding odd scan line. For example, pixel x21 may be determined based on the relationship between pixels a11, a21 and a31, pixel x22 may be determined based on the relationship between pixels a11, a22 and a32, etc.

It should be appreciated that the x pixel values for the intermediate scan lines may be determined based on any pixel neighborhood, and is not limited to a vertically adjacent neighborhood as illustrated in FIG. 3. For example, x values may be determined based on vertically and/or horizontally adjacent pixels, pixels from the odd field, even field or both, etc. In addition, it should be appreciated that the even field may be directly scanned to the progressive display video, and odd lines determined based on pixel adjacency, as the aspects of the invention are not limited in this respect.

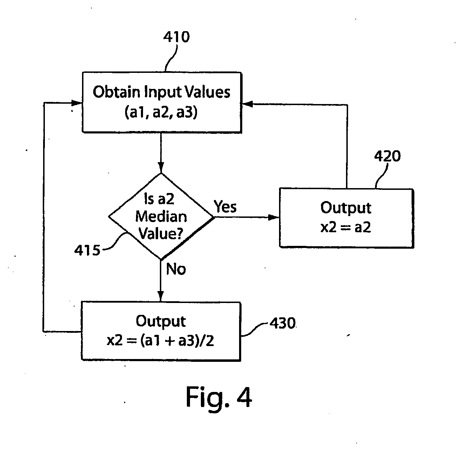

FIG. 4 illustrates a method of determining pixel values for intermediate scan lines in a progressive scan of interlaced video, in accordance with some embodiments of the present invention. Method 400 performs a progressive scan from interlaced video by scanning the odd lines directly from the odd field, and determining the even lines from the relationship between pixels vertically adjacent with the target pixel. It should be appreciated that the even lines could be determined from the even field and the odd lines determined from the relationship between pixels vertically adjacent with the target pixel, as the aspects of the invention are not limited in this respect.

In act 410, pixel values a1, a2, and a3 are obtained from the interlaced video. Pixels a1 and a3 may be pixels at a current horizontal location along adjacent even scan lines in the even field. Pixel a2 may be a pixel at the current horizontal location in the odd scan line between the even scan lines. For example, in a raster scan, the current location may start at the top left of the interlaced video (e.g., pixel.values a1, a2 and 3 may correspond with pixel values a11, a21 and a31 is FIG. 3), and move horizontally across successive pixels in the scan line, and then repeat at the next vertical scan line. As discussed above, pixel values a1 and a3 may be scanned directly into the display frame. However, to compensate, at least in part, for motion that may have occurred between acquiring the even and odd fields, pixel value a2 is not directly applied to the display frame. Rather, the corresponding value x2 is determined based on the relationship between a1, a2, and a3.

In act 415, it is determined whether a2 is the median value of pixels a1, a2 and a3. If a2 is the median value, then a2 is output (act 420) and may be directly applied to the display frame as pixel value x2. Otherwise, the average of pixels a1 and a3 are output (act 430) and the average may be applied to the display frame as pixel value x2. This procedure may then be repeated for each pixel value for the intermediate scan lines of the display frame, and again for each frame in the display video. For example, in a raster scan, the pixel values for the intermediate scan lines may be determined successively from left to right, top to bottom in each frame, and then repeated for each frame in the interlaced video.

Applicant has appreciated that the median computation is one method of determining that motion effects are present. The assumption is that if a2 is the median value, than no substantial motion occurred between capturing the even and odd field, and the actual value a2 may be displayed. Otherwise, if a2 is not the median value (i.e., it is outside of the range bounded by a1 and a3), the deviation is presumed to have resulted from motion occurring between the capture (e.g., recording) of the even and odd fields forming the interlaced video. To compensate for the presumed motion, the average value of a1 and a3 is used in place of a2 (which is presumed to be an artifact of motion).

It should be appreciated that computing the pixel values for the intermediate scan lines may be performed for each pixel in the intermediate scan lines. As a result, the algorithm used to determine what pixel value to apply to the display video should be relatively fast. For example, video may need to be displayed at 30 fps. Thus, sophisticated algorithms may either be too time consuming, or limited to display equipment having relatively large computing power. At the same time, the algorithm should compensate, to some extent, for motion effects. The algorithm described above provides a relatively simple, from a computational standpoint, algorithm that takes into account at least some motion effects.

Conventional algorithms that employ a median calculation typically do so by computing which of the input pixel values is the median, and then comparing the median value with a target pixel value to determine whether the target pixel value is the median. For example, for three vertically adjacent pixel values a1, a2 and a3, to determine if a2 is the median, conventional median computations first determine the median value of a1, a1 and a3, and then compare the determined median value to a2 to determine if a2 is the median value.

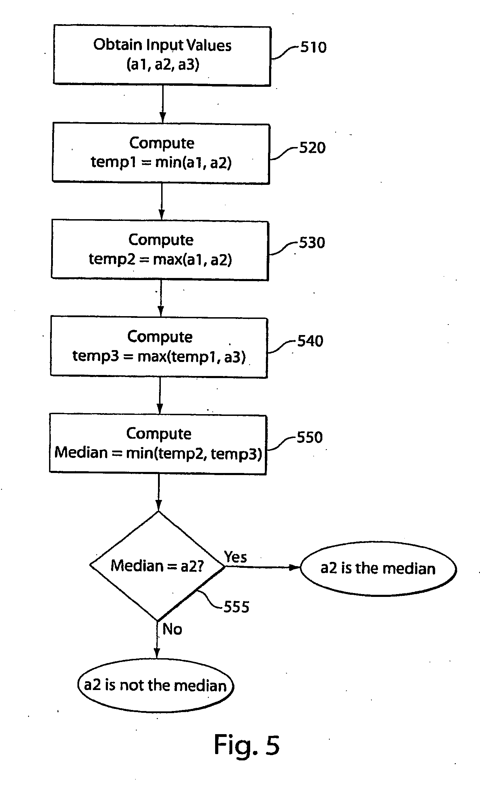

For example, FIG. 5 illustrates one conventional method of median value computation on three input values a1, a2, a3 (e.g., vertically adjacent pixels from two successive odd scan lines and the intermediate even scan line). In steps 504-510, a median is calculated by employing three temporary variables, temp1, temp2, and temp3. In step 520, a minimum of the values of the pixels $a_1$ and $a_2$ is calculated and assigned to temp1. In step 530, a maximum of the values of the pixels $a_1$ and $a_2$ is computed and assigned to temp2. The temp3 variable is defined as a maximum of temp 1 and the value of the pixel $a_3$, in step 540. In step 550, the median is computed as a minimum of temp2 and temp3. The median value is then compared with a2 to determine if they are the same value (i.e., to determine if a2 is the median value) in step 555.

The median calculation shown in FIG. 5 requires four minimum and maximum operations. In one implementation of the algorithm illustrated in FIG. 5, using a processor from the family of the Blackfin digital signal processors available from Analog Devices, Inc., Norwood, MA, 6.25 cycles were required to complete the median computation. To deinterlace a video frame, the algorithm 400 may be applied to each pixel in the frame. A standard video frame at 720x480 pixels, displayed at a rate of 30 fps, requires that 720x480x30 $\approx$ 10.4 million pixels be scanned per second. This number can make the algorithm prohibitively expensive from a computation standpoint, particularly with respect to embedded computing devices.

Applicant has appreciated that conventional methods for median computations may be unnecessarily lengthy. In particular, Applicant has recognized that the median value of a set of input values need never actually be computed to make a median determination with respect to one of the input values. Rather than actually computing the median value, Applicant has developed an algorithm that directly determines whether a pixel value is the median, without ever determining the median pixel value. By eliminating an express median calculation, the number of steps (and, ultimately, processor cycles) needed to perform a median computation may be reduced.

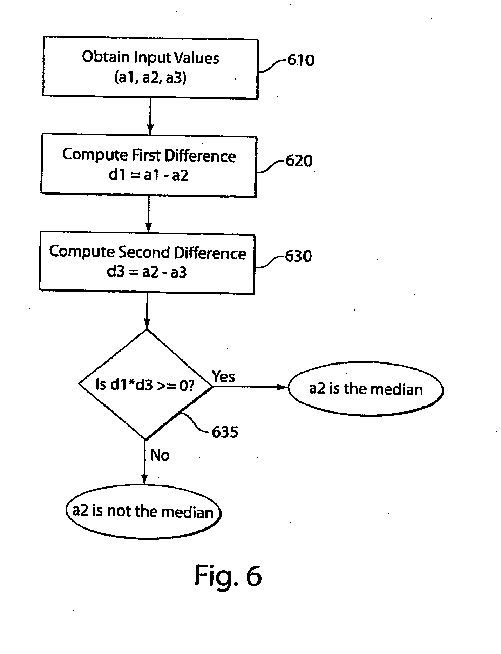

FIG. 6 illustrates a method of determining whether a pixel value is the median of a set of input values, in accordance with some embodiments of the present invention. In act 602, input values a1, a2 and a3 are obtained (e.g., from a current location of interlaced video), wherein it is to be determined whether a2 is the median value. A difference $d_1$ between the values of the pixels $a_1$ and $a_2$ is calculated in act 604 (e.g., $d_1 = a_1 - a_2$). In act 606, a difference $d_3$ between the values of the pixels $a_2$ and $a_3$ is calculated (e.g., $d_3 = a_2 - a_3$). Next, whether a2 is the median is determined using the two difference values d1 and d3. In particular, in act 608 it is determined whether the product of the difference values is greater than or equal to zero (e.g., the expression $d_1 * d_3 \geq 0$ is evaluated for truth). If the product of d1 and d3 is greater than or equal to zero, then a2 is the median value, otherwise a2 is not the median value.

The above algorithm may be used as the median computation of the intermediate scan line determination algorithm described in connection with FIG. 4 to further reduce the computational complexity of the motion compensated technique for deinterlacing video. It should be appreciated that acts 504 and 506 may be computed in any order or in parallel, as the aspects of the invention are not limited in this respect. In addition, other algorithms may be used that determine whether a given value is the median value without first computing the median value, as the aspects of the invention are not limited for use with any particular algorithm.

Following below is a proof that the algorithm described in connection with FIG. 6 correctly determines whether a particular value a2 is the median value of a set of values a1, a2 and a3. For the algorithm to be correct, statement 1 and 2 below must be equivalent,

Statement 1:

$$a_2 \text{ is median} \qquad (1)$$

Statement 2:

$$d_1 * d_3 \geq 0 \qquad (2)$$

where $d_1 = a_1 - a_2$ and $d_3 = a_2 - a_3$. Assuming that statement 1 holds, to prove that statement 2 is true, it may be noted that, if $a_2$ is a median, then either of the following expressions is true,

$$a_1 \geq a_2 \geq a_3 \qquad (3),$$

or

$$a_1 \leq a_2 \leq a_3 \qquad (4).$$

If expression 3 is true, then the following two expressions in equation 5 below are also true.

$$d_1 = (a_1 - a_2) \geq 0 \text{ and } d_3 = (a_2 - a_3) \geq 0 \qquad (5)$$

Therefore, $d_1 {}^* d_3 \geq 0$ is true. If expression 4 is true, then the following two expressions in equation 6 are also true.

$$d_1 = (a_1 - a_2) \leq 0 \text{ and } d_3 = (a_2 - a_3) \leq 0 \qquad (6)$$

Hence, the expression $d_1 {}^* d_3 \geq 0$ is true. Thus, statement 2 has been shown to be true if statement 1 is true. Next the converse of this is shown to hold. In particular, assuming that statement 2 holds, it shown that statement 1 is true. Initially, the following case is considered,

$$d_1 {}^* d_3 > 0 \qquad (7)$$

Expression 7 indicates that the signs of $d_1$ and $d_3$ are the same, which means that either of the following is true:

$$d_1 > 0 \text{ and } d_3 > 0 \qquad (8),$$

and

$$d_1 < 0 \text{ and } d_3 < 0 \qquad (9).$$

The inequalities shown in expression 8 indicate that $a_2$ is a median, since they imply that $d_1 = (a_1 - a_2) > 0$ and $d_3 = (a_2 - a_3) > 0$, i.e., $a_1 > a_2 > a_3$. If, instead, the inequalities shown in expression 9 are true, $a_2$ is also a median, since it has been shown that $a_1$, $a_2$, and $a_3$ are in consecutive order: $a_1 < a_2 < a_3$. Therefore, assuming statement 2, statement 1 has been shown to be true for case 7 (i.e., $d_1 {}^* d_3 > 0$). Next, assuming that statement 2 is true, statement 1 is shown to be true in view of the following special case:

$$d_1 {}^* d_3 = 0 \qquad (10)$$

Expression 10 implies that each of the following four possibilities may be true:

$$d_1 = 0 \text{ and } d_3 \leq 0 \qquad (11),$$

$$d_1 = 0 \text{ and } d_3 > 0 \qquad\qquad (12),$$

$$d_1 \leq 0 \text{ and } d_3 = 0 \qquad\qquad (13),$$

or

$$d_1 > 0 \text{ and } d_3 = 0 \qquad\qquad (14).$$

If case 11 is true, then,

$$a_1 = a_2 \text{ and } a_2 \leq a_3 \qquad\qquad (15),$$

from $d_1 = 0$ and $d_3 \leq 0$, respectively. Therefore, it follows that,

$$a_1 = a_2 \leq a_3 \qquad\qquad (16)$$

which illustrates that $a_2$ is a median value and statement 1 is shown to be true in the case of 11. If case 12 is true; then

$$a_1 = a_2 \text{ and } a_2 > a_3 \qquad\qquad (17),$$

from $d_1 = 0$, and $d_3 > 0$, respectively. Therefore, it follows that,

$$a_1 = a_2 > a_3 \qquad\qquad (18),$$

which illustrates that $a_2$ is a median and statement 1 is true for case 12. If case 13 is true,

$$a_2 = a_3 \text{ and } a_1 \leq a_2 \qquad\qquad (19),$$

from $d_3 = 0$, and $d_1 \leq 0$, respectively. Therefore, it follows that

$$a_1 \leq a_2 = a_3 \qquad\qquad (20),$$

which illustrates that a2 is a median value and statement 1 is shown to be true for case 13. If case 14 is true, then

$$a_2 = a_3 \text{ and } a_1 > a_2 \qquad\qquad (21),$$

from $d_3 = 0$ and $d_1 > 0$, respectively. Therefore, it follows that,

$$a_1 > a_2 = a_3 \qquad\qquad (22),$$

which illustrates that a2 is a median value and statement 1 is shown to be true for case 14. Accordingly, the foregoing illustrates that the algorithm described in connection with FIG. 5 correctly determines whether a2 is a median value. The deinterlacing method described in connection with FIG. 4 in combination with the median computation described in connection with FIG. 6 may be used to implement a relatively efficient deinterlacing algorithm that may result in substantial speed ups from conventional motion compensation deinterlacing algorithms. However, it should be appreciated that the deinterlacing algorithm of FIG. 4 may be used with other median computation methods, as the aspects of the invention are not limited in this respect. In addition, the median computation of FIG. 6 may be used in other contexts besides deinterlacing, as the aspects of the invention are not limited for use with any particular application.

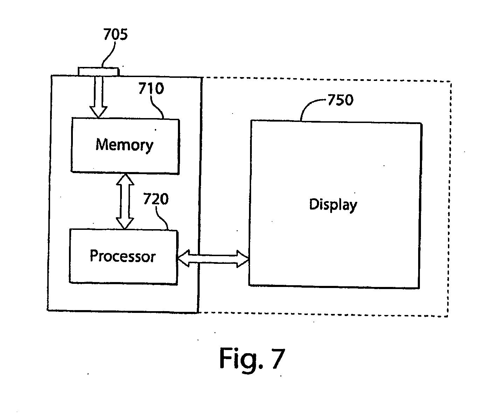

FIG. 7 illustrates a display system suitable for implementing various aspects of the present invention. Display system 700 includes a display capable of displaying pixels using a progressive scan. Display 750 may be a display screen for a hand-held device, a computer monitor, plasma screen, liquid crystal display (LCD), digital light processing (DLP) display, etc. Display 750 may also be a interlaced display adapted for progressive scans, or any other display intended for displaying pixels in the progressive format, as the aspects of the invention are riot limited in this respect.

Display system 700 includes a processor 720 coupled to the display to process video. The processor may be any type of computer capable of performing mathematical and/or logical computations. The processor may be one or more general purpose processors capable of executing instructions, such as those stored in a compute program, or may be one or more specialized processors. Processor 720 may be programmed to process interlaced video for display in a progressive scan, and may be configured to perform any of the various algorithms described in the foregoing. For example, processor 720 may be programmed to determine pixel values for intermediate scan lines according to the algorithm described in connection with FIG. 4 and/or perform a median computation as described in connection with FIG. 6. It should be appreciated that processor 720 may be programmed to perform any one or combination of the algorithms described herein, as the aspects of the invention are not limited in this respect. Processor 720 may be an embedded processor, or a stand alone computer.

The display system may also include a memory 710 for storing at least portions of video to be displayed on display 750. Memory 710 may be accessible by processor 720 so that that video may be read out from the memory and processed before being provided to display 750. In particular, memory 710 may store portions of received interlaced video to be processed by processor 720 in a progressive scan, and more particularly, processed to compensate for motion artifacts before being presented for display. Memory 710 may be a frame buffer, on-chip cache, or any type of storage media such as ROMs, RAMs, floppy disks, CD-ROMs, DVDs, etc.

Display system 700 includes an input 705 by which memory 710 receives video. For example, input 705 may be an antenna for receiving broadcast television or other video signals. Input 705 may be a cable connection for receiving a cable television or other video signal. Input 705 may be a network port for receiving video over a network such as the Internet, or any other connection capable of receiving video. Processor 720 and memory 710 may be integrated together or hosted on separate devices. Likewise, processor 720 and display 750 may be integrated such as in a hand held, mobile or laptop device, or any of various television sets such as plasma, LCD, DLP, etc., or separate such as in a desktop computer with an external monitor or other display. In addition, processor 720 may be remote from display, and video data may be provided over a network, wirelessly or via any other remote connectivity technology.

The above-described embodiments of the present invention can be implemented in any of numerous ways. For example, the embodiments may be implemented using hardware, software or a combination thereof. When implemented in software, the software code can be executed on any suitable processor or collection of processors, whether provided in a single computer or distributed among multiple computers. It should be appreciated that any component or collection of components that perform the functions described above can be generically considered as one or more controllers that control the above-discussed function. The one or more controller can be implemented in numerous ways, such as with dedicated hardware, or with general purpose hardware (e.g., one or more processor) that is programmed using microcode or software to perform the functions recited above.

It should be appreciated that the various methods outlined herein may be coded as software that is executable on one or more processors that employ any one of a variety of operating systems or platforms. Additionally, such software may be written using any of a number of suitable programming languages and/or conventional programming or scripting tools, and also may be compiled as executable machine language code.

In this respect, it should be appreciated that one embodiment of the invention is directed to a computer readable medium (or multiple computer readable media) (e.g., a computer memory, one or more floppy discs, compact discs, optical discs, magnetic tapes, etc.) encoded with one or more programs that, when executed on one or more computers or other processors, perform methods that implement the various embodiments of the invention discussed above. The computer readable medium or media can be transportable, such that the program or programs stored thereon can be loaded onto one or more different computers or other processors to implement various aspects of the present invention as discussed above.

It should be understood that the term "program" is used herein in a generic sense to refer to any type of computer code or set of instructions that can be employed to program a computer or other processor to implement various aspects of the present invention as discussed above. Additionally, it should be appreciated that according to one aspect of this embodiment, one or more computer programs that when executed perform methods of the present invention need not reside on a single computer or processor, but may be distributed in a modular fashion amongst a number of different computers or processors to implement various aspects of the present invention.

Various aspects of the present invention may be used alone, in combination, or in a variety of arrangements not specifically discussed in the embodiments described in the foregoing and is therefore not limited in its application to the details and arrangement of components set forth in the foregoing description or illustrated in the drawings. The invention is capable of other embodiments and of being practiced or of being carried out in various ways. In particular, the various concepts related to variable radiation energy and variable radiation intensity may be used in any way, either alone or in any combination, as the aspects of the invention are not limited to the specific combinations described herein. Accordingly, the foregoing description and drawings are by way of example only.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Also, the phraseology and terminology used herein is for the purpose of description and should not be regarded as limiting. The use of "including, " "comprising, " or "having, " "containing", "'involving", and variations thereof herein, is meant to encompass the items listed thereafter and equivalents thereof as well as additional items.

## Claims

1. A method of determining a target pixel value (x21) at a horizontal position of an intermediate scan line in a progressive display of interlaced video on a progressive display device, the interlaced video comprising a plurality of frames, each frame including a first field and a second field, the first field and the second field containing alternating scan lines of the respective frame, **characterized in that** the method comprises computer implemented acts of:

   calculating a first difference (d1) between a first pixel (a11) value obtained from the interlaced video at the horizontal position in a first scan line of the first field and a second pixel value obtained from the interlaced video at the horizontal position in a first scan line of the second field;
   calculating a second difference (d3) between the second pixel value (a21) and a third pixel value (a31) obtained from the interlaced video at the horizontal position in a second scan line of the first field;
   multiplying the first and second differences to obtain an indicator value;
   determining, if the indicator value greater than or equal to zero, that the second pixel value is a median; and
   determining, if the indicator value is less than zero, that the second pixel value is not the median.

2. The method of claim 1, wherein the first field is an odd field and the first scan line of the first field and the second scan line of the first field are adjacent odd numbered scan lines in the odd field, and wherein the second field is an even field and the first scan line in the second field is an even numbered scan line between the adjacent odd numbered scan lines.

3. The method of claim 1, wherein the first field is an even field and the first scan line of the first field and the second scan line of the first field are adjacent even numbered scan lines in the even field, and wherein the second field is an odd field and the first scan line in the second field is an odd numbered scan line between the adjacent even numbered scan lines.

**4.** The method of claim 1 further comprising

displaying the second pixel value (a21) as the target pixel value (x21) at the horizontal position if the second pixel value is the median; and

displaying an average of the first pixel value (a21) and the third pixel value (a31) at the horizontal position if the second pixel value is not the median.

**5.** An apparatus for determining a target pixel value of an intermediate scan line in a progressive display of interlaced video on a progressive display device, the interlaced video comprising a plurality of frames, each frame including a first field and a second field, the first field and the second field containing alternating scan lines of the respective frame, **characterized in that** the apparatus comprises:

a display (750) capable of displaying pixels in a progressive scan; and

at least one processor (720) coupled to the display, **characterised by** the at least one processor being configured to calculate a first difference (d1) between a first pixel value obtained from the interlaced video at a horizontal position in a first scan line of the first field and a second pixel value obtained from the interlaced video at the horizontal position in a first scan line of the second field, calculate a second difference (d3) between the second pixel value and a third pixel value obtained from the interlaced video at the horizontal position in a second scan line of the first field, and multiply the first difference and the second difference to obtain an indicator value, wherein if the indicator value is greater than or equal to zero, the at least processor determines the second pixel value to be the median, and if the indicator value is less than zero, the at least one processor determines that the second pixel is not the median.

**6.** The apparatus of claim 5, further comprising a memory (710) accessible by the at least one processor for storing at least portions of the interlaced video.

**7.** The apparatus of claim 5, wherein the first field is an odd field and the first scan line of the first field and the second scan line of the first field are adjacent odd numbered scan lines in the odd field, and wherein the second field is an even field and the first scan line in the second field is an even numbered scan line between the adjacent odd numbered scan lines.

**8.** The apparatus of claim 5, wherein the first field is an even field and the first scan line of the first field and the second scan line of the first field are adjacent even numbered scan lines in the even field, and wherein the second field is an odd field and the first scan line in the second field is an odd numbered scan line between the adjacent even numbered scan lines.

**9.** The apparatus of claim 5, wherein if the second pixel value is the median, the at least one processor provides the second pixel value to the display, and if the second pixel value is not the median, the at least one processor provides an average of the first pixel value and the third pixel value to the display.

**Patentansprüche**

**1.** Verfahren zum Bestimmen eines Zielpixelwerts (x21) an einer horizontalen Position einer Zwischenabtastzeile in einer progressiven Anzeige eines Videos mit Zeilensprungverfahren auf einer progressiven Anzeigevorrichtung, wobei das Video mit Zeilensprungverfahren eine Mehrzahl von Rahmen umfasst, wobei jeder Rahmen ein erstes Feld und ein zweites Feld umfasst, wobei das erste Feld und das zweite Feld alternierende Abtastzeilen des jeweiligen Rahmens beinhalten, **dadurch gekennzeichnet, dass** das Verfahren die computerimplementierten Schritte aufweist:

Berechnen einer ersten Differenz (d1) zwischen einem ersten Pixel (a11) -Wert, der von dem Video mit Zeilensprungverfahren an der horizontalen Position in einer ersten Abtastzeile des ersten Felds erhalten wird und einem zweiter Pixel-Wert, der von dem Video mit Zeilensprungverfahren an einer horizontalen Position in einer ersten Abtastzeile des zweiten Felds erhalten wird;

Berechnen einer zweiten Differenz (d3) zwischen dem zweiten Pixelwert (a21) und einem dritten Pixelwert (a31), der von dem Video mit Zeilensprungverfahren an der horizontalen Position in einer zweiten Abtastzeile des ersten Felds erhalten wird;

Multiplizieren der ersten und zweiten Differenz, um einen Indikatorwert zu erhalten;

Bestimmen, dass wenn der Indikatorwert größer oder gleich Null ist, der zweite Pixelwert ein Median ist; und

Bestimmen, dass wenn der Indikatorwert geringer ist als Null, der zweite Pixelwert kein Median ist.

2. Verfahren nach Anspruch 1, wobei das erste Feld ein ungeradzahliges Feld ist und die erste Abtastzeile des ersten Felds und die zweite Abtastzeile des ersten Felds benachbarte ungerade nummerierte Abtastzeilen in dem ungeradzahligen Feld sind, und wobei das zweite Feld ein geradzahliges Feld ist und die erste Abtastzeile in dem zweiten Feld eine geradzahlig nummerierte Abtastzeile zwischen den benachbarten ungeradzahlig nummerierten Abtastzeilen ist.

3. Verfahren aus Anspruch 1, wobei das erste Feld ein geradzahliges Feld ist und die erste Abtastzeile des ersten Felds und die zweite Abtastzeile des ersten Felds benachbarte geradzahlig nummerierte Abtastzeilen in dem geradzahligen Feld sind, und wobei das zweite Feld ein ungeradzahliges Feld ist und die erste Abtastzeile in dem zweiten Feld eine ungeradzahlig nummerierte Abtastzeile zwischen den benachbarten geradzahlig nummerierten Abtastzeilen ist.

4. Verfahren aus Anspruch 1, das ferner aufweist:

Anzeigen des zweiten Pixelwerts (a21) als ein Zielpixelwert (x21) an der horizontalen Position, wenn der zweite Pixelwert der Median ist; und
Anzeigen eines Mittelwerts des ersten Pixelwerts (a21) und des dritten Pixelwerts (a31) an der horizontalen Position, wenn der zweite Pixelwert nicht der Median ist.

5. Vorrichtung zum Bestimmen eines Zielpixelwerts einer Zwischenabtastzeile in einer progressiven Anzeige eines Videos mit Zeilensprungverfahren auf einer progressiven Anzeigevorrichtung, wobei das Video mit Zeilensprungverfahren eine Mehrzahl von Rahmen aufweist, wobei jeder Rahmen ein erstes Feld und ein zweites Feld umfasst, wobei das erste Feld und das zweite Feld alternierende Abtastzeilen des jeweiligen Rahmens beinhalten, **dadurch gekennzeichnet, dass** die Vorrichtung aufweist:

eine Anzeige (750), die Pixel in einer progressiven Abtastung anzeigen kann; und
mindestens einen Prozessor (720), der mit der Anzeige gekoppelt ist, **gekennzeichnet dadurch, dass** der mindestens eine Prozessor konfiguriert ist, eine erste Differenz (d1) zwischen einem ersten Pixelwert, der von dem Video mit Zeilensprungverfahren an einer horizontalen Position in einer ersten Abtastzeile des ersten Felds erhalten wird, und einem zweiten Pixelwert, der von dem Video mit Zeilensprungverfahren an einer horizontalen Position in einer ersten Abtastzeile des zweiten Felds erhalten wird, zu berechnen, eine zweite Differenz (d3) zwischen dem zweiten Pixelwert und einem dritten Pixelwert, der von dem Video mit Zeilensprungverfahren an der horizontalen Position in einer zweiten Abtastzeile des ersten Felds erhalten wird, zu berechnen, und die erste Differenz und die zweite Differenz zu multiplizieren, um einen Indikatorwert zu erhalten, wobei, wenn der Indikatorwert größer oder gleich Null ist, der mindestens eine Prozessor den zweiten Pixelwert dazu bestimmt, der Median zu sein und wenn der Indikatorwert kleiner als Null ist, der mindestens eine Prozessor bestimmt, dass das zweite Pixel nicht der Median ist.

6. Vorrichtung aus Anspruch 5, die ferner einen Speicher (710) aufweist, auf den der mindestens eine Prozessor zugreifen kann, um mindestens Teile des Videos mit Zeilensprungverfahren zu speichern.

7. Vorrichtung aus Anspruch 5, wobei das erste Feld ein ungeradzahliges Feld ist und die erste Abtastzeile des ersten Felds und die zweite Abtastzeile des zweiten Felds benachbarte ungeradzahlig nummerierte Abtastzeilen in dem ungeradzahligen Feld sind, und wobei das zweite Feld ein geradzahliges Feld ist und die erste Abtastzeile in dem zweiten Feld eine geradzahlig nummerierte Abtastzeile zwischen den benachbarten ungeradzahlig nummerierten Abtastzeilen ist.

8. Vorrichtung aus Anspruch 5, wobei das erste Feld ein geradzahliges Feld ist und die erste Abtastzeile des ersten Felds und die zweite Abtastzeile des ersten Felds benachbarte geradzahlig nummerierte Abtastzeilen in dem geradzahligen Feld sind, und wobei das zweite Feld ein ungeradzahliges Feld ist und die erste Abtastzeile in dem zweiten Feld eine ungeradzahlig nummerierte Abtastzeile zwischen den benachbarten geradzahlig nummerierten Abtastzeilen ist.

9. Vorrichtung aus Anspruch 5, wobei wenn der zweite Pixelwert der Median ist, der mindestens eine Prozessor den zweiten Pixelwert an die Anzeige liefert, und wenn der Pixelwert nicht der Median ist, der mindestens eine Prozessor einen Mittelwert des ersten Pixelwerts und des dritten Pixelwerts an die Anzeige liefert.

**Revendications**

1. Procédé pour déterminer une valeur de pixel cible (x21) dans une position horizontale d'une ligne de balayage intermédiaire lors d'un affichage progressif de vidéo entrelacée sur un dispositif d'affichage progressif, la vidéo entrelacée comprenant une pluralité de trames, chaque trame comprenant un premier champ et un second champ, le premier champ et le second champ contenant des lignes de balayage alternées de la trame respective, **caractérisé en ce que** le procédé comporte les étapes implémentées par ordinateur consistant à :

   - calculer une première différence (d1) entre une première valeur de pixel (a11) obtenue à partir de la vidéo entrelacée dans la position horizontale dans une première ligne de balayage du premier champ, et une deuxième valeur de pixel obtenue à partir de la vidéo entrelacée dans la position horizontale dans une première ligne de balayage du second champ ;
   - calculer une seconde différence (d3) entre la deuxième valeur de pixel (a21) et une troisième valeur de pixel (a31) obtenue à partir de la vidéo entrelacée dans la position horizontale dans une seconde ligne de balayage du premier champ ;
   - multiplier les première et seconde différences pour obtenir une valeur indicatrice ;
   - déterminer, si la valeur indicatrice est supérieure ou égale à zéro, que la deuxième valeur de pixel est une médiane ; et
   - déterminer, si la valeur indicatrice est inférieure à zéro, que la seconde valeur de pixel n'est pas la médiane.

2. Procédé selon la revendication 1, dans lequel le premier champ est un champ impair, et la première ligne de balayage du premier champ et la seconde ligne de balayage du premier champs sont des lignes de balayage à numéro impair adjacentes dans le champ impair, et dans lequel le second champ est un champ pair, et la première ligne de balayage dans le second champ est une ligne de balayage à numéro pair située entre deux lignes de balayage à numéro impair adjacentes.

3. Procédé selon la revendication 1, dans lequel le premier champ est un champ pair, et la première ligne de balayage du premier champ et la seconde de balayage du premier champ sont des lignes de balayage à numéro pair adjacentes dans le champ pair, et dans lequel le second champ est un champ impair, et la première ligne de balayage dans le second champ est une ligne de balayage à numéro impair située entre des lignes de balayage à numéro pair adjacentes.

4. Procédé selon la revendication 1, comportant en outre les étapes consistant à :

   - afficher la deuxième valeur de pixel (a21) en tant que valeur de pixel cible (x21) dans la position horizontale si la deuxième valeur de pixel est la médiane ; et
   - afficher une moyenne de la première valeur de pixel (a21) et de la troisième valeur de pixel (a31) dans la position horizontale si la deuxième valeur de pixel n'est pas la médiane.

5. Appareil pour déterminer une valeur de pixel cible d'une ligne de balayage intermédiaire dans un affichage progressif de vidéo entrelacée sur un dispositif d'affichage progressif, la vidéo entrelacée comportant une pluralité de trames, chaque trame comportant un premier champ et un second champ, le premier champ et le second champ contenant des lignes de balayage alternées de la trame respective, **caractérisé en ce que** l'appareil comporte :

   - un affichage (750) capable d'afficher des pixels dans un balayage progressif ; et
   - au moins un processeur (720) couplé à l'affichage, **caractérisé en ce que** l'au moins un processeur est configuré pour calculer une première différence (d1) entre une première valeur de pixel obtenue à partir de la vidéo entrelacée dans une position horizontale dans une première ligne de balayage du premier champ, et une deuxième valeur de pixel obtenue à partir de la vidéo entrelacée dans la position horizontale dans une première ligne de balayage du second champ, calculer une deuxième différence (d3) entre la deuxième valeur de pixel et une troisième valeur de pixel obtenue à partir de la vidéo entrelacée dans la position horizontale dans une seconde ligne de balayage du premier champ, et multiplier la première différence et la seconde différence pour obtenir une valeur indicatrice,
   - dans lequel, si la valeur indicatrice est supérieure ou égale à zéro, l'au moins un processeur détermine que la deuxième valeur de pixel doit être la médiane, et si la valeur indicatrice est inférieure à zéro, l'au moins un processeur détermine que le deuxième pixel n'est pas la médiane.

6. Appareil selon la revendication 5, comportant en outre une mémoire (710) accessible par l'au moins un processeur pour stocker au moins des parties de la vidéo entrelacée.

7. Appareil selon la revendication 5, dans lequel le premier champ est un champ impair, et la première ligne de balayage du premier champ et la seconde ligne de balayage du premier champ sont des lignes de balayage à numéro impair adjacentes dans le champ impair, et dans lequel le second champ est un champ pair, et la première ligne de balayage dans le second champ est une ligne de balayage à numéro pair située entre des lignes de balayage à numéro impaire adjacente.

8. Appareil selon la revendication 5, dans lequel le premier champ est un champ pair, et la première ligne de balayage du premier champ et la seconde ligne de balayage du premier champ sont des lignes de balayage à numéro pair adjacentes dans le champ pair, et dans lequel le second champ est un champ impair, et la première ligne de balayage dans le second champ est une ligne de balayage de numéro impair située entre des lignes de balayage à numéro pair adjacentes.

9. Appareil selon la revendication 5, dans lequel si la deuxième valeur de pixel et la médiane, l'au moins un processeur fournit la deuxième valeur de pixel à l'affichage, et si la deuxième valeur de pixel n'est pas la médiane, au moins un processeur fournit une moyenne de la première valeur de pixel et de la troisième valeur de pixel à l'affichage.

100                                          110

1 ——————————————————▶  ─102          1 ——————————————————▶
3 ——————————————————▶                2 ——————————————————▶
5 ——————————————————▶                3 ——————————————————▶
7 ——————————————————▶                4 ——————————————————▶
9 ——————————————————▶                5 ——————————————————▶
              ⋮                      6 ——————————————————▶
                                     7 ——————————————————▶
                          ⇨          8 ——————————————————▶
2 ——————————————————▶                9 ——————————————————▶
4 ——————————————————▶               10 ——————————————————▶
6 ——————————————————▶                         ⋮
8 ——————————————————▶
10 —————————————————▶  ─104
              ⋮

# Fig. 1

Fig. 2

EP 1 964 395 B1

Fig. 3

410

Obtain Input Values
(a1, a2, a3)

Is a2
Median
Value?

415

Yes → Output
x2 = a2

420

No

Output
x2 = (a1 + a3)/2

430

## Fig. 4

Fig. 5

Obtain Input Values
(a1, a2, a3) · —610

Compute First Difference
d1 = a1 - a2 —620

Compute Second Difference
d3 = a2 - a3 —630

Is d1*d3 >= 0?   Yes   →   a2 is the median

—635

No

a2 is not the median

## Fig. 6

705

710

Memory

720

Processor

750

Display

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 75265905 P
- EP 0361558 A
- WO 2004098178 A
- EP 1164792 A